Europäisches Patentamt

European Patent Office

Office européen des brevets

(11) Veröffentlichungsnummer: **0 474 986 A1**

## (12) EUROPÄISCHE PATENTANMELDUNG

(21) Anmeldenummer: **91110119.4**

(22) Anmeldetag: **20.06.91**

(51) Int. Cl.⁵: **C03B 37/027**

(30) Priorität: **06.09.90 DE 4028275**

(43) Veröffentlichungstag der Anmeldung:
**18.03.92 Patentblatt 92/12**

(84) Benannte Vertragsstaaten:
**AT BE CH DE DK ES FR GB GR IT LI LU NL SE**

(71) Anmelder: **kabelmetal electro GmbH
Kabelkamp 20 Postfach 260
W-3000 Hannover 1(DE)**

(72) Erfinder: **Bartel, Ulrich, Dipl.-Ing.
Leonbergerstrasse 10
W-7140 Ludwigsburg(DE)**
Erfinder: **Lange, Bernd
Jakobstrasse 11
W-7014 Kornwestheim(DE)**

(54) **Verfahren zur Herstellung von Glasfaser-Lichtwellenleitern mit erhöhter Zugfestigkeit.**

(57) Glasfaser-Lichtwellenleitern mit erhöhter Zugfestigkeit werden aus einer Glas-Vorform mit einer ein- oder mehrschichtigen zusätzlichen Umhüllung aus einem Glaswerkstoff gezogen, wobei der Werkstoff mindestens der jeweils äußersten Schicht einen gegenüber der darunter befindlichen Schicht bzw. gegenüber dem Material der Vorform niedrigen thermischen Ausdehnungskoeffizienten aufweist. Beim Ziehvorgang wird die Faser mit erhöhter Zugkraft relativ "kalt" aus der Vorform gezogen. Unter dem Begriff "kalt" ist ein Temperatur nahe der Glasschmelztemperaturbereich zu verstehen.

EP 0 474 986 A1

Die vorliegende Erfindung betrifft ein Verfahren zur Herstellung von Glasfaser-Lichtwellenleitern mit erhöhter Zugfestigkeit durch Ziehen aus einer Glas-Vorform mit einer ein- oder mehrschichtigen zusätzlichen Umhüllung aus einem Glaswerkstoff, wobei der Werkstoff mindestens der jeweils äußersten Schicht einen gegenüber der darunter befindlichen Schicht bzw. gegenüber dem Material der Vorform niedrigeren thermischen Ausdehnungskoeffizienten aufweist.

Verfahren der genannten Art sind bekannt, so hat man bereits (DE-OS 24 19 786) bei optischen Fasern, bestehend aus einem hochbrechenden Kern und einem niedrigbrechenden Mantel, zur Verbesserung der mechanischen Eigenschaften über dem Mantel einen weiteren Mantel angeordnet, dessen Wärmeausdehnungskoeffizient niedriger ist als der des ersten Mantels und/oder niedriger als der der Kombination Kern/erster Mantel. Auf diese Weise soll bei der Herstellung der Faser im Mantel eine Druckspannung aufgebaut werden, die die Faser unempfindlich gegen Zug- und Biegebeanspruchung macht.

Bekannt ist aber auch bereits ein Verfahren (DE-OS 27 27 054), bei dem zur Erhöhung der Zugfestigkeit einer Glasfaser auf den Mantel einer Faservorform zusätzlich wenigstens eine Schutzschicht aus einem Glasmaterial aufgebracht wird, das gegenüber dem angrenzenden Glasmaterial der Faservorform oder Faser einen niedrigeren thermischen Ausdehnungskoeffizienten aufweist. Um dies zu erreichen, wird für die Schutzschicht ein Glas auf der Basis von Siliciumdioxid verwendet, das mit einem oder mehreren Oxiden der chemischen Elemente Lithium, Natrium, Magnesium, Calcium, Bor und andere dotiert ist. Der mit einer solchen Schutzschicht versehene Glasstab wird in einer Faserziehmaschine bei üblichen Ziehtemperaturen von etwa 2000° C zur Faser ausgezogen.

Bei einer anderen bekannten Glasfaser (DE-OS 28 26 010) besteht zur Erhöhung der Zugfestigkeit die Außenhülle aus wenigstens einer Schicht, die wegen ihres gegenüber der Hülle niedrigeren thermischen Ausdehnungskoeffizienten Druck auf den lichtleitenden Aufbau ausübt. Da hierbei die Differenz zwischen beiden thermischen Ausdehnungskoeffizienten möglichst groß sein soll, kommen zur Erreichung des gewünschten Effektes auch Metallschichten zum Einsatz, wobei insbesondere an die Verwendung von Aluminium und Zinn gedacht ist.

Die mechanischen Eigenschaften auf diese Weise hergestellter Glasfaser-Lichtwellenleiter genügen jedoch nicht den gestellten Anforderungen, die sich dann ergeben, wenn solche Lichtwellenleiter in abspulbaren Längen aufgewickelt zur Fernsteuerung von Geräten und Anlagen verwendet werden.

Ausgehend von dem beschriebenen Stand der Technik liegt deshalb der Erfindung die Aufgabe zugrunde, Möglichkeiten zu finden, die zu einer Erhöhung der Bruchfestigkeit, Verbesserung der Alterungsbeständigkeit sowie zum Einfrieren von Mikrorissen führen.

Gelöst wird diese Aufgabe gemäß der Erfindung dadurch, daß die Faser mit erhöhter Zugkraft kalt aus der Vorform gezogen wird. Die Erfindung beruht dabei auf der Erkenntnis, daß die bisher getroffenen Maßnahmen, nämlich Erzeugung von Druckspannungen durch geeignete äußere Hüllen sowie Ziehen der Faser bei Temperaturen oberhalb 2000° C zwar zu einer Erhöhung der Zugfestigkeit führen, die hierdurch erreichten Werte jedoch nicht ausreichen, wenn an die Fasern besondere Anforderungen gestellt werden. Wird jedoch, wie bei der Erfindung vorgesehen, die Faser kalt, das ist in Weiterführung des Erfindungsgedanken beispielsweise ein Temperaturbereich nahe dem der jeweiligen Glasschmelztemperatur, aus der Vorform gezogen, wobei die hierzu benötigte Zugkraft auf ein hohes Niveau eingestellt wird, werden im Randbereich der Faser sehr hohe Druckspannungen erzeugt, die um ein Vielfaches über den Druckspannungen der Vorform liegen. Während des Ziehprozesses weist somit der innere Bereich des mehrschichtigen Vorformaufbaues stets eine höhere Viskosität auf als der äußere als Umhüllung dienende Bereich. Dies gilt selbstverständlich nur für den Entstehungsort der Spannungen innerhalb der durch den Ausziehvorgang entstehenden sogenannten Ziehzwiebel am erwärmten Ende der Vorform. Die an die Faser außen angelegte Zugspannung wird somit im inneren Bereich mit abnehmender Glastemperatur eingefroren, während der Querschnitt der äußeren Schichten bzw. der äußersten Umhüllung noch zu niedrig viskos ist, um Kräfte einzuprägen.

Aus einer Glasvorform hergestellte Fasern mit einer äußeren Schicht oder einem äußeren Mantel aus einem Material mit gegenüber dem Material der Vorform niedrigerem thermischen Ausdehnungskoeffizienten wird daher in Weiterführung des Erfindungsgedankens mit einer Zugkraft beim Ziehvorgang beaufschlagt, die 70 - 200 cN, vorzugsweise 90 - 150 cN, beträgt. Höhere Zugspannungen haben höhere Druckspannungen im Faserrandbereich und damit höhere Zugspannungen im Restquerschnitt der Faser zur Folge. Als Folge der Druckspannungen im Faserrand liegt darüberhinaus die Mikrorißgrößenverteilung an der Oberfläche der Faser auf einem niedrigen Niveau, wodurch die Fasern nach der Erfindung eine erhöhte Bruchfestigkeit aufweisen.

Wie beim angezogenen Stand der Technik erläutert, besteht die über dem Mantel der Vorform aufgebrachte zusätzliche Umhüllung aus dem gleichen Basismaterial wie die Vorform selbst, wobei zur Erzielung eines geringeren thermischen Ausdehnungskoeffizienten dieses Basisglasmaterial mit beliebigen Elementen dotiert ist. Abweichend hiervon sieht die Erfindung in einem weiteren Gedanken vor, daß als Material für die Schicht oder Schichten aus dem Glaswerkstoff mit niedrigerem thermischen Ausdehnungskoeffizienten ein synthetisches Quarzglas verwendet wird. Die erfindungsgemäßen Maßnahmen des Kaltziehens bei extrem hohen Zugspannungswerten im Zusammenhang mit dem synthetischen Quarzglas führen zu besonders hochwertigen Fasern, die auch den mechanischen Anforderungen dann genügen, wenn solche Fasern in großen Längen aufgewickelt und zur Steuerung von Geräten oder Anlagen eingesetzt werden.

Das synthetische Quarzglas kann beispielsweise mit Chlor dotiert sein, das mit zum unterschiedlichen Ausdehnungsverhalten des synthetischen gegenüber dem natürlichen Glasmaterial beiträgt, das Ursache für Druckspannungen im Vorformrand ist, die auch in der Faser selbst meßbar sind.

Durch Dotierung der verwendeten Glasmaterialien mit Fremdstoffen sind die Ausdehnungskoeffizienten weitgehend einstellbar, die Differenz der beiderseitigen Ausdehnungskoeffizienten sollte jedoch mindestens 4-6 % betragen, um für die gewünschten Zugfestigkeiten in der Faser vorausgesetzten Druckspannungen an der Faseroberfläche beim Ziehvorgang sicherzustellen.

Der Vorteil einer im Randbereich stark druckbeaufschlagten Faser ist im übrigen nicht nur in einer höheren Festigkeit der Faser selbst gegenüber bekannten Fasertypen zu sehen, sondern auch darin, daß der für die Herstellung verwendete Ziehofen beispielsweise aufgrund der niedrigen benötigten Ziehtemperaturen kostengünstiger gefahren werden kann. Diese Maßnahme steht nämlich im krassen Gegensatz zu dem aus dem Stand der Technik bekannten Herstellungsverfahren von Fasern, die, wie dort auch ausgeführt, bei hohen Temperaturen gezogen werden müssen, um die Mikrorisse an der Glasoberfläche klein zu halten.

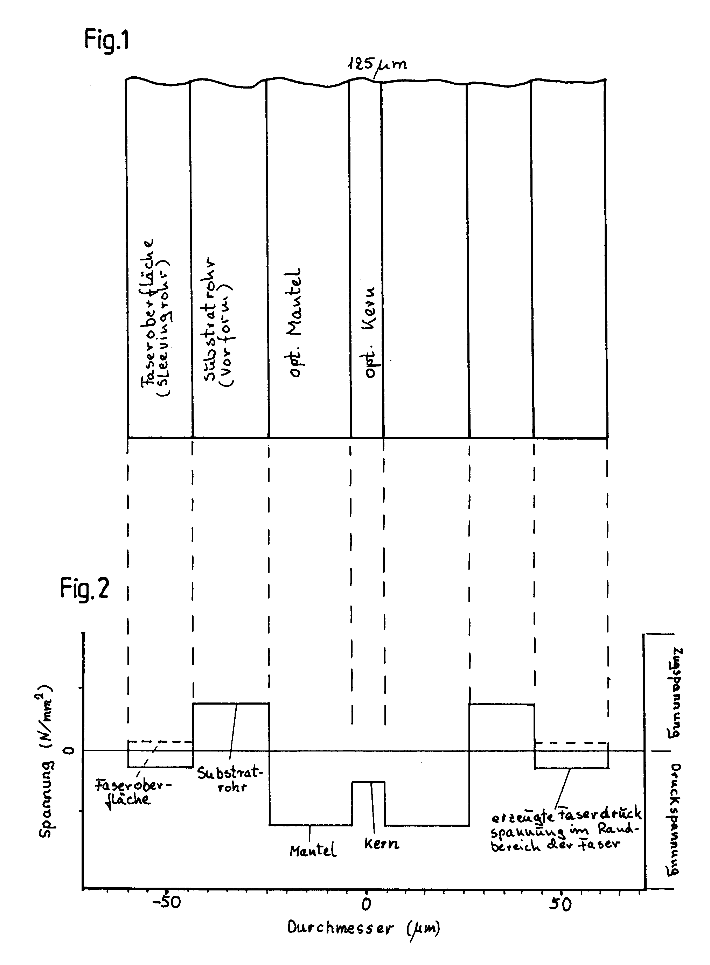

Die Erfindung sei anhand des in den Figuren 1 und 2 dargestellten Ausführungsbeispieles näher erläutert.

Das Ausführungsbeispiel bezieht sich auf einen Glasfaser-Lichtwellenleiter, der aus einer Vorform gemäß den Merkmalen der Erfindung gezogen wurde, die durch Innenbeschichten eines Substratrohres und anschließendes Kollabieren dieses Rohres hergestellt worden ist. Über das Substratrohr übergeschoben wurde dann ein sogenanntes Sleeving-Rohr aus einem Material mit gegenüber dem Substratrohr niedrigeren thermischen Ausdehnungskoeffizienten. Im vorliegenden Ausführungsbeispiel wurde als Material für das Hüllrohr ein synthetisches, mit Chlor dotiertes Quarzglas verwendet.

Den geschilderten Aufbau einer erfindungsgemäßen Faser, beispielsweise mit einem Faserquerschnitt von 125 $\mu$m zeigt die Fig. 1. Danach befindet sich im Innern der Faser der optische Kern, über den die einzelnen aus der Gasphase niedergeschlagenen Schichten angeordnet sind, die den optischen Mantel bilden. Darüber ist das Substratrohr angeordnet, das zunächst sowohl mit dem Kern als auch mit dem Mantelmaterial beschichtet zur Vorform kollabiert ist. Die Faseroberfläche schließlich wird gebildet durch die entsprechend der Erfindung verwendete Schicht aus dem Material mit gegenüber dem Substratrohr geringeren thermischen Ausdehnungskoeffizienten, im vorliegenden Fall das erwähnte synthetische Glas.

In der Fig. 2 ist der Faserspannungsverlauf über den gesamten Faserquerschnitt angegeben, wobei auf die durch den Kern, den Mantel, das Substratrohr und die Umhüllung gebildeten Einzelschichten im Faserquerschnitt Bezug genommen wird. Wie bereits ausgeführt, ist das Wesentliche des Verfahrens nach der Erfindung darin zu sehen, daß die Faser mit erhöhter Zugkraft, beispielsweise zwischen 90 und 150 cN kalt aus der Vorform gezogen wird. Diese Maßnahmen erzeugen, wie die Fig. 2 erkennen läßt, im Bereich der Faseroberfläche im Gegensatz zu bekannten Verfahren hohe Druckspannungen, die ein Vielfaches über den Druckspannungen der Vorform liegen. Die hohen Druckspannungen im Faserrandbereich sind in der niedrigen Erweichungstemperatur des Materials des Sleeving-Rohres gegenüber den höheren Erweichungstemperaturen des optischen Kerns sowie des optischen Mantels und des Substratrohres begründet.

Als Folge der aus der Fig. 2 ersichtlichen Druckspannungen im Faserrandbereich liegt die Mikrorißgrößenverteilung an der Oberfläche der Faser auf einem sehr niedrigen Niveau, die Fasern weisen damit eine hohe Bruchfestigkeit auf. Wird dagegen, wie bisher mit den bekannten Verfahren praktiziert, eine übliche Faser durch Ziehen aus einer Vorform hergestellt, dann weist diese mit eingeprägten Zugspannungen im Randbereich, wie es die gestrichelte Linie des Faserspannungsverlaufes in der Fig. 2 im Bereich Sleeving-Rohr wiedergibt, im Randbereich eine geringere Festigkeit auf, je höher die Zugkraft während des Ziehprozesses ist. Die an einer Faser gemessene Bruchfestigkeit wird um die eingeprägte Druckspannung reduziert, da sie der von außen angelegten Zugspannung entgegenwirkt. Sind dagegen, wie bisher üblich, Zugspannungen im Randbereich, d. h. im Bereich des Sleeving-Rohres eingeprägt, dann werden diese Zugspannungen im Randbereich durch außen angelegte Zugspannungen noch um diese erhöht.

**Patentansprüche**

1. Verfahren zur Herstellung von Glasfaser-Lichtwellenleitern mit erhöhter Zugfestigkeit durch Ziehen aus einer Glas-Vorform mit einer ein- oder mehrschichtigen zusätzlichen Umhüllung aus einem Glaswerkstoff, wobei der Werkstoff mindestens der jeweils äußersten Schicht einen gegenüber der darunter befindlichen Schicht bzw. gegenüber dem Material der Vorform niedrigeren thermischen Ausdehnungskoeffizienten aufweist, dadurch gekennzeichnet, daß die Faser mit erhöhter Zugkraft kalt aus der Vorform gezogen wird.

2. Verfahren nach Anspruch 1, dadurch gekennzeichnet, daß die Faser bei Temperaturen nahe der jeweiligen Glas-Schmelztemperatur gezogen wird.

3. Verfahren nach Anspruch 1 oder 2, dadurch gekennzeichnet, daß die Zugkraft beim Ziehvorgang 70 - 200 cN, vorzugsweise 90 - 150 cN, beträgt.

4. Verfahren nach Anspruch 1 oder 2, dadurch gekennzeichnet, daß als Material für die Schicht oder Schichten aus dem Glaswerkstoff mit niedrigeren thermischen Ausdehnungskoeffizienten ein synthetisches Quarzglas verwendet wird.

5. Verfahren nach Anspruch 3, dadurch gekennzeichnet, daß das synthetische Quarzglas dotiert ist.

6. Verfahren nach Anspruch 4, dadurch gekennzeichnet, daß als Dotierungskomponente Chlor verwendet wird.

7. Verfahren nach Anspruch 1 oder einem der folgenden, bei dem die Vorform aus einem innenbeschichteten und kollabierten Rohr besteht, das von einer Schicht aus einem gegenüber dem Werkstoff der Vorform einen niedrigeren thermischen Ausdehnungskoeffizienten aufweisenden synthetischen Glas überdeckt ist, dadurch gekennzeichnet, daß die Differenz der beiderseitigen Ausdehnungskoeffizienten mindestens 4-6 % beträgt.

8. Verfahren nach Anspruch 1 oder einem der folgenden, dadurch gekennzeichnet, daß die Schicht aus dem Material mit geringerem thermischen Ausdehnungskoeffizienten ein vorgefertigtes Rohr (Sleeving-Rohr) ist.

9. Verfahren nach Anspruch 1 oder einem der folgenden, dadurch gekennzeichnet, daß die Schicht aus dem Material mit geringerem thermischen Ausdehnungskoeffizienten aus einem in Pulverform auf die Vorform aufgebrachten und anschließend gesinterten Glasmaterial besteht.

## Fig.1

## Fig.2

Europäisches
Patentamt

EUROPÄISCHER
RECHERCHENBERICHT

Nummer der Anmeldung

EP 91 11 0119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN vol. 6, no. 244 (C-138)(1122) 2. Dezember 1982 <br> – – – | 1-5,8,9 | C 03 B 37/027 |
| Y | * Zusammenfassung * <br> & WORLD PATENTS INDEX LATEST Week 8241, Derwent Publications Ltd., London, GB; AN 82-87228E <br> * Zusammenfassung * & CHEMICAL ABSTRACTS, vol. 98, no. 8, Columbus, Ohio, US; abstract no. 58808J, EP 91110119030* * Zusammenfassung * & JP-A-57 145 043 (NIPPON DENSHIN DENWA KOSHA) 7. September 1982 * <br> – – – | 6 | |
| Y | EP-A-0 189 865 (SUMITOMO ELECTRIC IND.LTD.)August 1986 <br> * Seite 2, Zeilen 10-15 ; Seite 7, Zeilen 2-10 * * <br> – – – | 6 | |
| D,A | DE-A-2 727 054 (SIEMENS AG) <br> * Ansprüche 1-4,7,8 * * <br> – – – | 1,4,5 | |
| D,A | DE-A-2 419 786 (JENAER GLASWERK SCHOTT & GEN.) <br> * Ansprüche 1,2,8 * * <br> – – – | 1 | RECHERCHIERTE SACHGEBIETE (Int. Cl.5) |
| A | PATENT ABSTRACTS OF JAPAN vol. 2, no. 133 (E-69)8. November 1978 <br> & JP-A-53 100 255 ( NIPPON DENSHIN DENWA KOSHA ) 9. Januar 1978 <br> * Zusammenfassung * * <br> – – – | 1 | C 03 B |
| A | JOURNAL OF NON-CRYSTALLINE SOLIDS. Bd. 70, Nr. 2, März 1985, AMSTERDAM NL Seiten 233 - 242; J.LAU ET AL.: 'Influence of drawing temperature on the strength of fluoride glass fibers' <br> * Seite 241 * * <br> – – – <br> –/– | 1 | |

Der vorliegende Recherchenbericht wurde für alle Patentansprüche erstellt

| Recherchenort | Abschlußdatum der Recherche | Prüfer |
|---|---|---|
| Den Haag | 26 November 91 | STROUD J.G. |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
  nach dem Anmeldedatum veröffentlicht worden ist
D : in der Anmeldung angeführtes Dokument
L : aus anderen Gründen angeführtes Dokument
--------------------------------------------------
& : Mitglied der gleichen Patentfamilie,
  übereinstimmendes Dokument

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | OPTICAL FIBER COMMUNICATION CONFERENCE, 25-28 Januar 1988, New Orleans, US; Bd. 1,Seiten 222225, "Postconference" Auflage, Optical Society of America,Washington DC,US; U.C.PAEK et al. 'Fiber drawing from 7.5cm diameter preforms at high speed'.<br>* Abbildung 2 * *<br>– – – | 1-3 | |
| A | PATENT ABSTRACTS OF JAPAN vol. 7, no. 225 (C-189)(1370) 6. Oktober 1983<br>& JP-A-58 120 531 ( FURUKAWA DENKI KOGYO KK ) 18. Juli 1983<br>* Zusammenfassung * *<br>– – – – – | 1 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| Den Haag | 26 November 91 | STROUD J.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument